# EUROPEAN PATENT APPLICATION

(11) **EP 0 808 579 A1**
(43) Date of publication of application: **26.11.1997**
(21) Application number: 97201800.6
(22) Date of filing: 22.05.1990
(51) Int. Cl.: A23N 15/00, B26D 3/26, B26D 3/10

(54) **Method and apparatus for producing a vegetable product**

(30) Priority: 22.05.1989 US 354940
(62) Divisional of application: 90201304.4
(71) Applicant: Plant, Rex Bennett, Hamilton Ontario L9C 6K7 (CA)
(72) Inventor: Plant, Rex Bennett, Hamilton, Ontario, L9C 6K7 (CA); Marton, John Peter, Sherwood, Prince Edward Island, C1A 6S7 (CA)
(74) Representative: Bartelds, Erik

(57) **Abstract**

A method and appartus for producing a product pf predetermined shape from a vegetable, in which the vegetable is held near a rotary cutting means, the vegetable and the cutting means are moved towards each other, and the cutting means are rotated such as to cut out a portion of the vegetables. In one aspect of the invention a cylindrical plug is cut into the vegetable, a cylindrical pocket is cut in the plug, and the base of the plug is severed from the vegetable to form a cup. In other aspects of the invention the vegetable is split and the opposed sections are scooped out, a cavity is carved out of the core, and a heart-shaped core is formed by impinging opposed cutters with auxiliary rotating knives.

## Description

### FIELD OF THE INVENTION

This invention relates to a method and an apparatus for mechanically cutting food produce into shaped configurations.

### BACKGROUND OF THE INVENTION

It has long been known to cut, by hand, vegetables and the like into various shaped configurations for decorative purposes. It has also been long known to use a mechanical apparatus to cut vegetables into various simple, generally longitudinal shapes. For example, a CUISINART (a trade-mark) can be used to cut food produce into strips or juliennes and the like.

However, such known methods and apparatus cannot be applied on an industrial level where a high volume of produce is to be cut into complex, generally non-longitudinal shapes.

It is therefore an object of the present invention to provide an improved method and apparatus for automatically cutting produce into shaped configurations.

### STATEMENT OF THE INVENTION

In accordance the present invention, there is provided, a method and an apparatus for producing a product of predetermined shape from a vegetable, in which the vegetable is held in the vicinity of a rotatable cutting means, the vegetable and the cutting means are moved towards each other, and the cutting means are rotated, such as to cut out a portion of the vegetable. In another aspect of the invention a cylindrical plug is cut into the vegetable, a cylindrical pocket is cut in the plug, and the base of the plug is severed from the vegetable to form a cup. In other aspects of the invention the vegetable is split and the opposed sections are scooped out, a cavity is carved out of the core, and a heart-shaped core is formed by impinging opposed cutters with auxiliary rotating knives.

### BRIEF DESCRIPTION OF THE DRAWINGS

Example embodiments of the invention are shown in the accompanying drawings, in which:
Figure 1 is a perspective view, in partial cross-section, of a first embodiment of the cutting apparatus of the invention;
Figure 2 is a side view of the cutting means shown in figure 1;
Figure 3 is a bottom plan view of the cutting apparatus of figure 1, taken in the direction of arrow 12;
Figure 4 is a side view of the cutting apparatus shown in figure 1, positioned to cut a potato;
Figure 5 is a side view similar to figure 4, in partial section, of the apparatus cut into a potato;
Figure 6 is a view again similar to figure 4, showing cut portions of the potato in cross-section;
Figure 7 is a perspective view of a second embodiment showing a cutting apparatus of the invention producing a scooped out vegetable product;
Figure 8 is a plan view, partly in cross-section, of the apparatus of figure 7 in operation;
Figure 9 is a side view of a third embodiment of the invention, partly in cross-section, showing a cutting apparatus for producing a hollow vegetable product;
Figure 10 is a view similar to figure 9 showing the apparatus penetrating the vegetable;
Figure 11 is a view similar to figure 10 showing the apparatus expanded within the vegetable to cut out the core;
Figure 12 is a perspective view of a fourth embodiment showing a cutting apparatus which produces a heart-shaped vegetable product;
Figure 13 is a side view of the apparatus of figure 12 penetrating the vegetable;
Figure 14 is a view similar to figure 13 showing the cutting knives of the apparatus operating to shape the product; and
Figure 15 shows the product produced by the apparatus of figures 12 to 14.

### DESCRIPTION OF PREFERRED EMBODIMENT

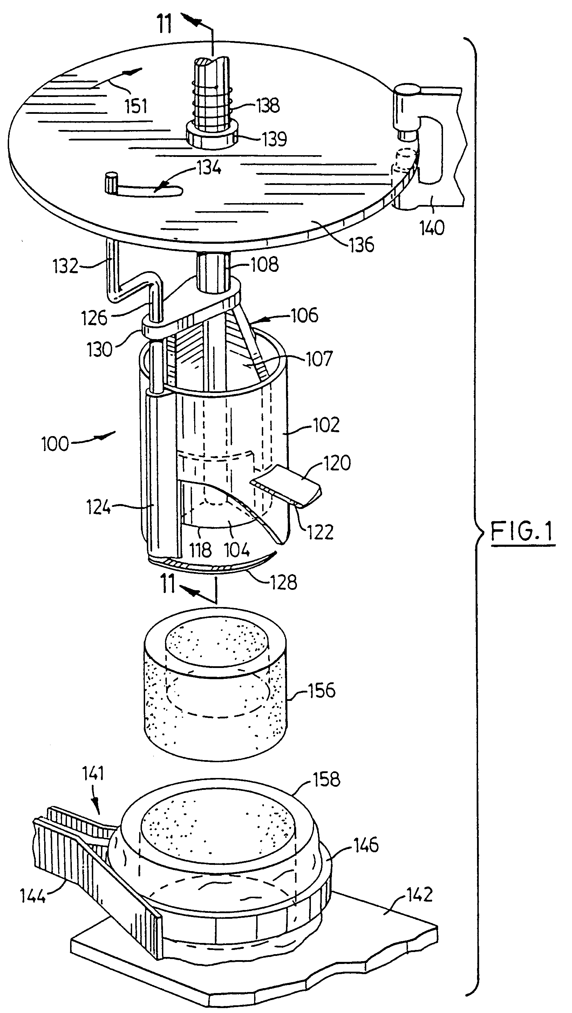

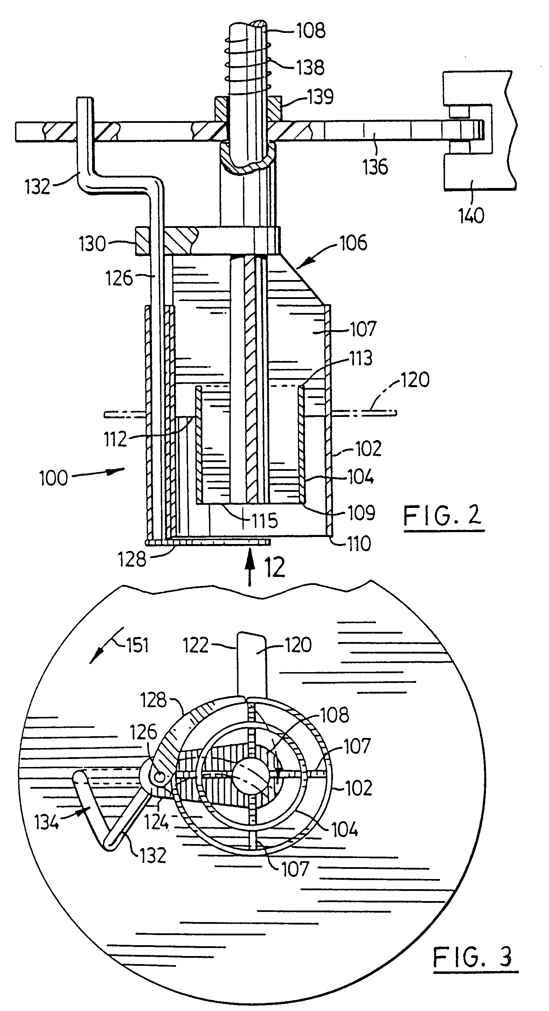

The first embodiment shown in Figure 1 to 6 of the drawings consists of a cutting apparatus 100 comprising an outer cylindrical cutting tube 102 and a concentric inner cylindrical cutting tube 104 both fixed on a cruciform brace 106 having flanges 107 extending radially from a rotatable drive shaft 108. As seen in Figure 2: (1) the lower rim 109 of inner cutting tube 104 lies above the lower rim 110 of outer cutting tube 102, i.e. the inner tube terminates within the outer tube; (2) the lower ends 112 of flanges 107 of brace 106 located between inner cutting tube 104 and outer cutting tube 102 lie below the upper rim 113 of inner cutting tube 104 and above the lower rim 110 of outer cutting tube 102; and (3) the lower ends 115 of flanges 107 of brace 106 located within inner cutting tube 104 terminate at lower rim 109 of inner cutting tube 104. A fin 120 extends laterally from outer cutting element 102 with a leading cutting edge 122 lying in the same plane as the lower ends 112 of flanges 107 of brace 106.

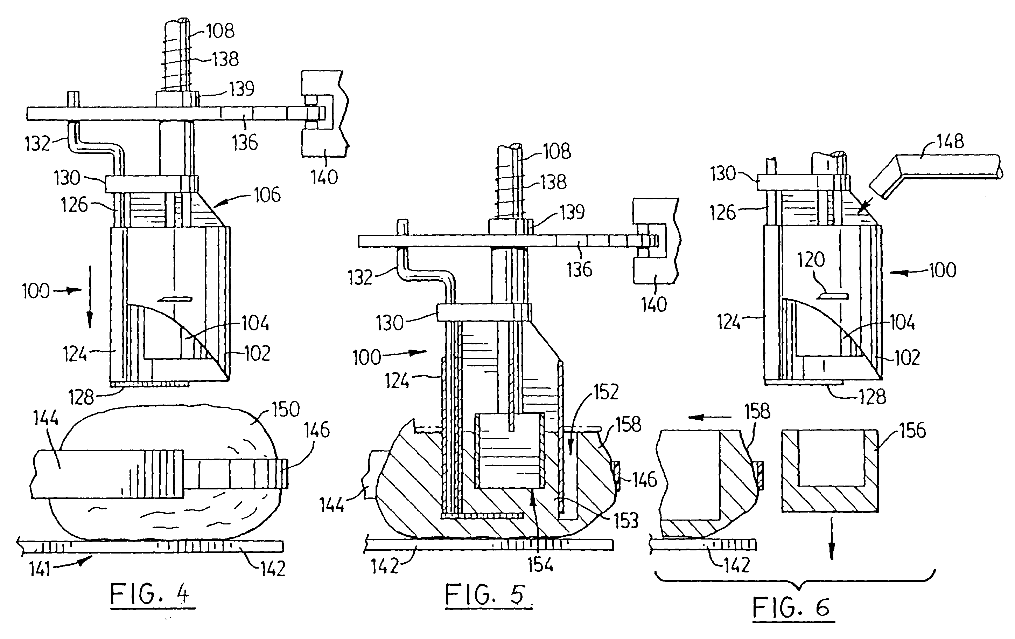

Outer cutting tube 102 carries a sleeve 124 holding a vertical shaft 126 rotatable in the sleeve. An arcuate cutting spur 128 is fixed to the lower end of shaft 126 with its cutting edge following the curve of outer cutting element 102. The upper portion of shaft 126 passes through a flange 130 fixed on shaft 108 and the shaft is angled above the flange to form a crank arm 132. The upper end of crank arm 132 engages an arcuate slot 134 in a disc 136 which is mounted concentrically on drive shaft 108 and is freely rotatable on the drive shaft. A torsion spring 138 is attached at one end to a bushing 139 on disc 136 and at the other end to shaft 108. A disc brake 140 brackets the periphery of disc 136. A nozzle 148 (Figure 6) of an air or water conduit (not shown) is located above cutting tube 102 and 104.

A laterally movable holding unit 141 is positioned below cutting apparatus 100 and consists of a platform 142 and a V-shaped bracket 144 located above the platform and offset from the axis of drive shaft 108. A loop 146 of resilient material extends laterally from bracket 144 with the centre of the loop lying in the axis of drive shaft 108.

The operation of the embodiment of Figures 1 to 6 is shown in Figures 4 to 6. A potato 150 is placed on platform 142 within loop 146 which is tightened to hold the potato against bracket 144, thereby positioning the potato directly below cutting apparatus 100 as seen in Figure 4. Drive shaft 108 is then rotated at considerable speed, say 2500 rpm, in the direction of arrow 151 and cutting apparatus 100 is lowered onto potato 150. As cutting apparatus 100 moves downwardly, spur 128 and the lower end 110 of outer cutting tube 102 bite into potato 150, cutting an annular cavity 152 in the potato to form a cylindrical plug 153, and at the same time cutting tube 102 and lower ends 115 of flanges 107 cut a cylindrical pocket 154 in plug 153 concentric with cavity 152. In the same step wing 120 trims the upper part of outer portion 158 of the potato and lower ends 112 of flanges 107 trim the annular portion of the potato between cutting tubes 102 and 104, all as seen in Figure 5. On reaching a predetermined depth, disc brake 140 is actuated, against the action of torsion spring 138, to slow the rotation of disc 136 which pushes crank arm 132 against the end of slot 134 as seen in Figure 1 and 2 causing spur 128 to move inwardly across bottom 110 of outer cutting tube 102, as shown in broken lines in Figure 3. Slot 134, curving inwardly, accommodates the radial component of movement of crank arm 132. The inward movement of spur 128 severs that portion of the potato within the outer cutting element, forming an inner cup 156 and an outer cup 158. On the completion of these steps cutting apparatus 100 is raised, carrying cup 156 which rests on spur 128. Platform 142 is then moved laterally, with bracket 144, to dispose of outer cup 158 of potato 150 for collection by suitable means not shown. Disc brake 140 is then disengaged, allowing spring 138 to move spur 128 back to its position of rest and allowing inner cup 156 to be forced out of cutting tubes 102 and 104 by a jet of fluid (air and water in the form of a spray) from nozzle 148, to drop onto a suitable collecting mechanism not shown. If desired, a transverse nick in the lower ends of 109 and 110 of cutting tubes 104 and 102 creates a burr which facilitates the separation of cup 156 from apparatus 100. It will be appreciated that the walls of cutting elements 102 and 104 are thin and do not require bevelled edges to cut through a vegetable product.

The term "vegetable" used herein includes a fruit.

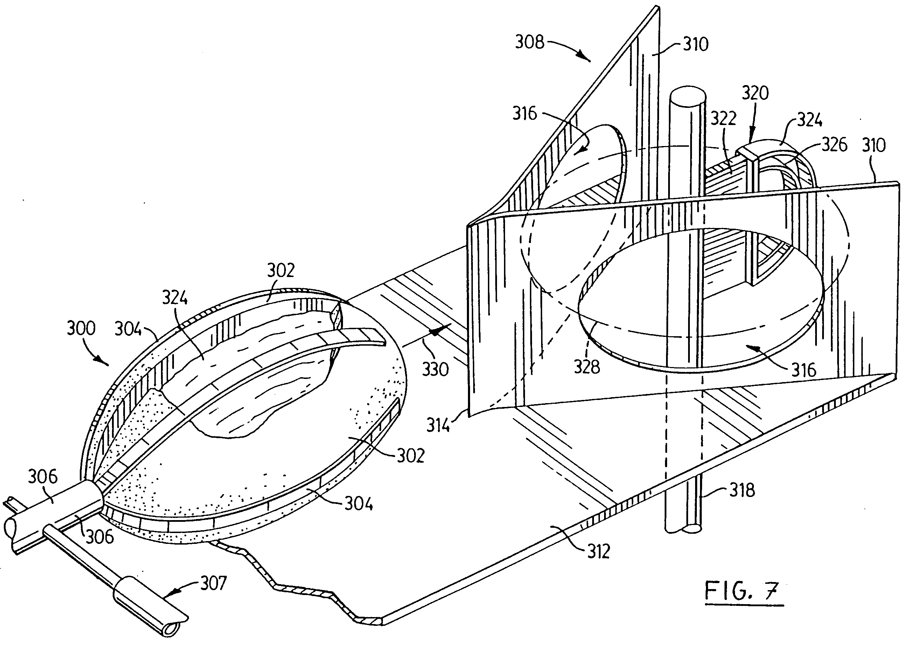

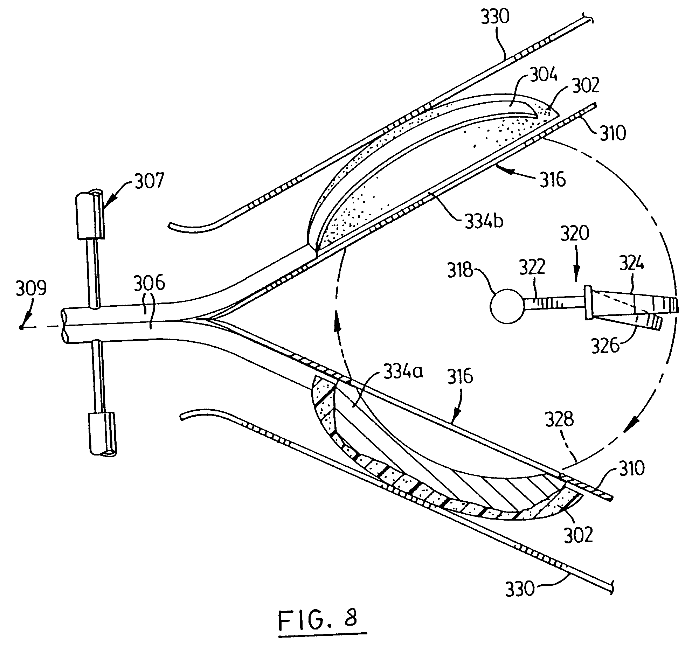

The second embodiment of Figures 7 and 8 consists of a carrier 300 which comprises an inner lining forming a bifurcated shell with a pair of semi-elliptical cups 302 of resilient material such as foam rubber, each cup being carried by a plurality of leaf springs 304. Springs 304 are carried by a pair of laterally flexible shafts 306 which are movable laterally by a pair of cylinder and piston assembles 307 pivotable about a point 309.

Carrier 300 is positioned adjacent a cutting device 308 which comprises a pair of upright face plates 310 resting on a platform 312 and converging to form a vertical knife 314. Centrally located in each face plate 310 is an elliptical aperture 316. An axially rotatable vertical shaft 318 lies between plates 310 and a knife assembly 320 projects laterally from the shaft. Knife assembly 320 comprises a flange 322 carrying a pair of concentric semicircular knives 324 (outer) and 326 (inner) sharpened at their leading edges 327. The arc of rotation, indicated by arrow 328, of knives 324, 326 passes through opposed apertures 316. Inner knife 326 is slightly advanced over outer knife 324 with respect to arc 328, which facilitates the cutting operation. Knife assembly 320 is interchangeable to provide other configurations. An additional knife assembly (not shown) may be attached to shaft 318 diametrically opposed to assembly 320. A guide plate 330 (shown only in Figure 8) lies parallel to each face plate 310.

In the operation of the device of Figures 7 and 8 a vegetable, shown in the drawings as a potato 334, is placed between cups 302 in carrier 300 which is then closed by the action of cylinder and piston assemblies 307. Carrier 300 is advanced towards cutting device 308 in the direction of arrow 330, allowing knife 314 to pass between cups 302 and engage potato 334. As carrier 300 advances, knife 314 splits potato 334 in half and the two resultant sections 334a an 334b of the potato slide over the face of plates 316 until they come to rest covering apertures 316, as seen in Figure 8. Guide plates 330 bear laterally against springs 304 to press potato segments 334a, 334b against face plates 310, whereupon shaft 318 is rotated 360^{o} to pass through that portion of each potato section exposed in apertures 316, thereby scooping out the exposed portions of both potato sections. Knife 324 is advanced over knife 326 to facilitate the cutting operation. After shaft 318 has been rotated, carrier 300 is withdrawn and cylinder and piston assembly 307 opens the carrier which allows hollowed potato segments 334a, 334b to drop from cups 302. Carrier 300 is then closed again on another potato by cylinder and piston assemblies 307. Potato segments 334a, 334b are collected by a suitable arrangement not shown and the material scooped from the segments by knives 324, 326 is also collected in a suitable manner when it drops below cutting device 308.

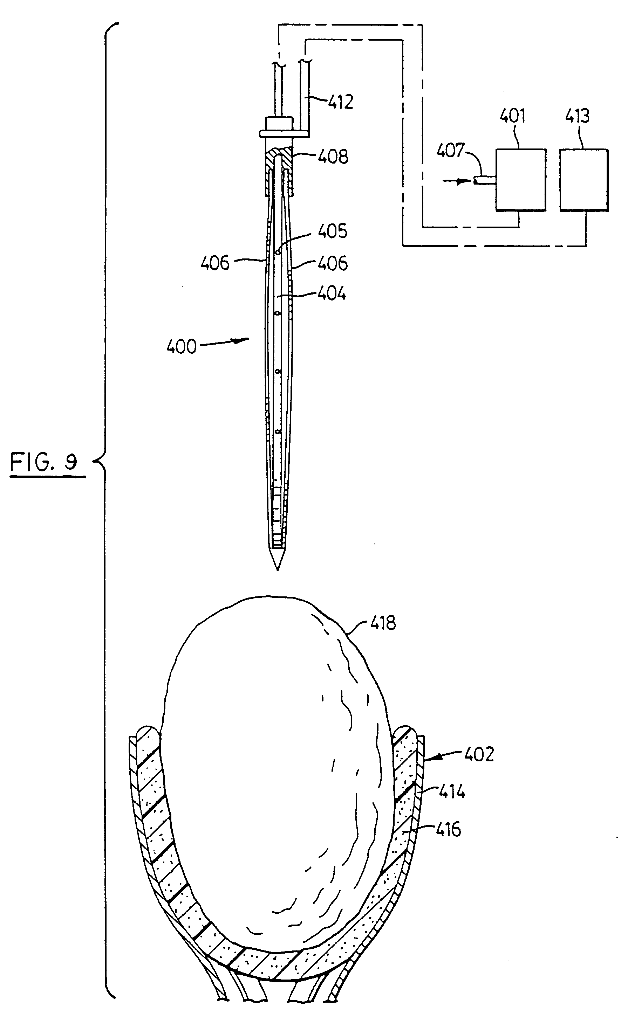

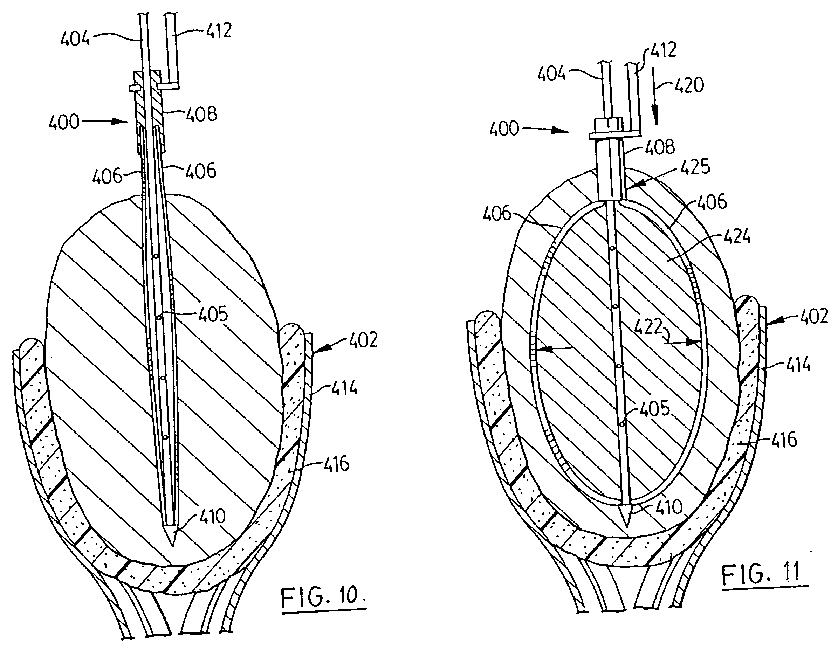

In the embodiment shown in Figures 9 to 11 of the drawings a boring tool 400 is mounted on a drive unit 401 such as a drill press located directly above a support 402. Boring tool 400 comprises a vertical shaft 404 carrying a plurality of spring blades 406 lying parallel to the shaft. Shaft 404 is tubular and has a plurality of lateral orifices 405 located between collar 408 and socket 410. Drive unit 401 includes a fluid inlet line 407 for feeding fluid into shaft 404. Blade 406 are held at one end by a collar 408 slidable on shaft 404 and held at the other end in a socket 410 which also forms a piercing end to the shaft. A push rod 412, parallel to shaft 404, is mounted at one end on a drive unit 413 fixed to collar 408. Support 402 comprises a plurality of fingers 414 with an inner lining forming a cup 416 of suitable cushioning material.

In the operation of the device of Figures 9 to 11 a vegetable, shown in the drawings as a potato 418, is placed in cup 402. Shaft 402 of boring tool 400 is then lowered to pierce potato 418, as seen in Figure 25, until socket 410 is located adjacent the lower end of the potato and lining 416. Next, push rod 412 is moved in the direction of arrow 420, as seen in Figure 26, which causes blades 406 to flex laterally in the direction of arrows 422. Shaft 404 is then rotated to carve a cavity in the central portion 424 of potato 418. The loose material lying in central portion 424 is flushed from the potato 418 by injecting fluid through shaft 404 which enters the central portion through orifices 405 and carries the loose material out through an aperture 425 which is formed by collar 408 and opened when the collar is withdrawn by push rod 412.

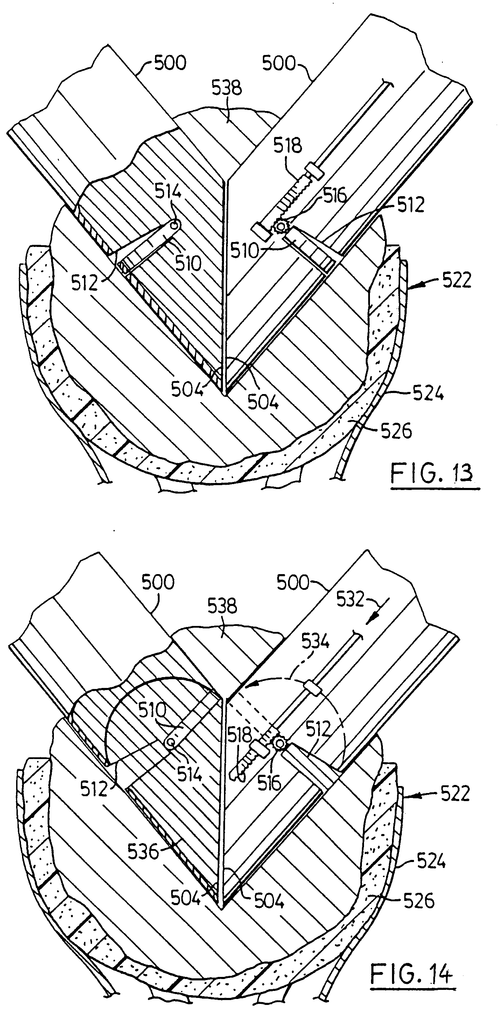

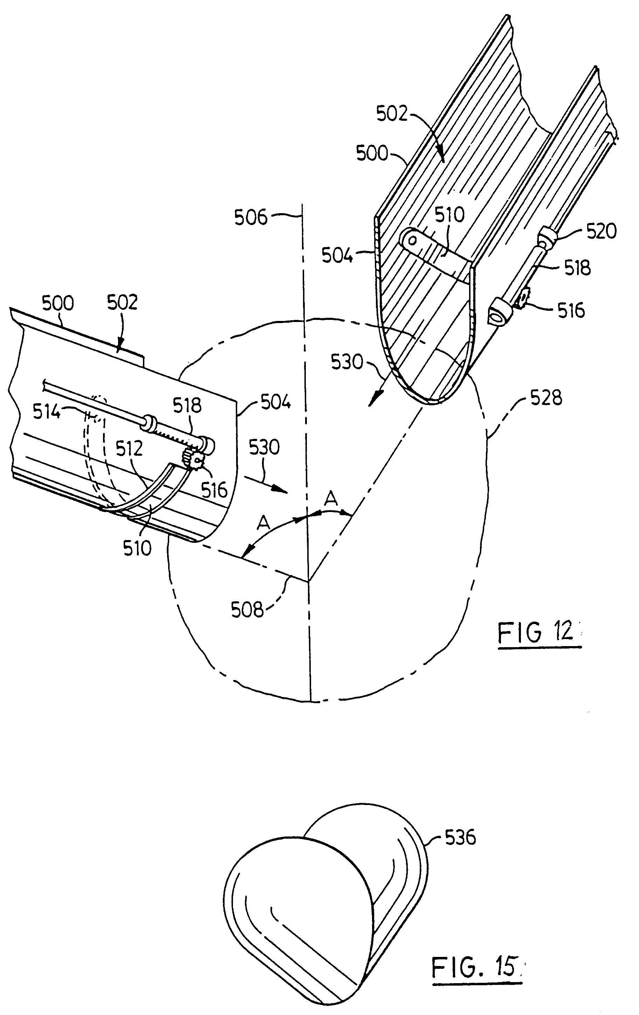

The fourth embodiment shown in Figures 12 to 15 of the drawings consists of a pair of opposed downwardly sloping cutters 500 which are each contoured in cross-section to provide a U-shaped channel 502 with one end bevelled to form a cutting edge 504 lying parallel to a vertical plane 506. Cutters 500 are positioned to have their axes 508 meet at an angle A of about forty degrees to plane 506 whereby each cutting edge slopes at an angle of about forty degrees with respect to cutter axis 508. Each cutter 500 carries a U-shaped knife 510 which rests in a slot 512 at the bottom of channel 502 in the contour of the channel. Each knife 510 is pivotally mounted at each end to the cutter by a pin 514 fixed to the knife and freely rotatable in the cutter. One pin 514 carries a pinion 516 located on the outside surface of the cutter and engaged by a rack 518 slidably mounted on bosses 520 attached to the outer surface of the cutter. Slot 512 is configured to allow knife 510 to clear the bottom of channel 502 when the knife rotates, as seen in the drawings.

Cutters 500 are positioned above a support 522 (see Figures 13 and 14) which comprises a plurality of fingers 524 with an inner lining forming a cup 526 of suitable cushioning material.

In the operation of the embodiment of Figures 12 to 14, a potato 528 (or other suitable vegetable or fruit) is placed in support 522 which is centred with respect to vertical plane 506. Cutters 500 are then moved forward longitudinally in the direction of arrows 530 to cut into the potato and to meet whereby cutting edges 504 abut one another in vertical plane 506. In the next step racks 518 of each cutter 500 are advanced in the direction of arrow 532 (see Figure 14) which rotates knives 510 in a circular arc indicated by arrow 534 in Figure 29. Knife 510 are advanced past plane 506 sequentially to provide a complete cut. It will be seen that the action of cutters 500 and knives 510 produces a heart-shaped core 536 which is removable after breaking away cap 538 of the potato formed by the cutting operation.

## Claims

1. A method of producing a product of predetermined shape from a vegetable, comprising the steps of:
- positioning the vegetable, with respect to a rotatable cutting means,
- moving said vegetable and said cutting means towards each other, and
- rotating said cutting means in order to cut out a portion of said vegetable.

2. The method of claim 1, **characterized** by the steps of:
- cutting a cylindrical plug of given depth in the vegetable and simultaneously cutting a cylindrical pocket in the plug, and
- severing the base of the plug from the vegetable to form a cup.

3. The method as claimed in claim 2, including the step of trimming the rim of the cup.

4. The method of claim 1, **characterized** by the steps of:
- advancing the vegetable to pass over a knife edge formed by the junction of a pair of converging plates, the two resultant sections of the vegetable each being moved to a position covering an aperture in each of the plates,
- rotating knife means to scoop out that portion of the section exposed in each aperture; and
- withdrawing the scooped out sections from the plates for collection.

5. The method of claim 1, **characterized** by the steps of:
- positioning the vegetable in the projected axis of a shaft carrying a plurality of spring blades lying parallel to the shaft and flexible laterally;
- advancing the shaft to penetrate the vegetable; and
- flexing the blades laterally and rotating the shaft to carve a cavity in the vegetable.

6. The method as claimed in claim 5, including the step of ejecting the material from the cavity.

7. The method of claim 1, **characterized** by the steps of:
- placing the vegetable in a support to lie in a predetermined vertical plane;
- moving a pair of cutters towards one another to abut in said plane within the vegetable, each cutter having a downwardly sloping U-shaped channel member with the lower end thereof forming a cutting edge lying in a vertical plane and having a U-shaped knife pivotally mounted therein lying in the contour of the channel; and
- rotating the knives in a circular path to meet in said plane whereby a heart-shaped core is formed in the vegetable.

8. An apparatus for producing a product of predetermined shape from a vegetable, comprising:
- support means for supporting said vegetable with respect to a cutting means,
- said cutting means having at least one cutting element rotatably mounted around an axis,
- means for moving said support and said cutting means relatively to each other, and
- means for rotating said cutting element of said cutting means in order to cut out a portion of said vegetable.

9. The apparatus of claim 8, **characterized** by:
- means to cut a cylindrical plug of given depth in the vegetable and to cut a cylindrical pocket in the plug, and drive means therefor;
- means to sever the base of the plug to form a cup and to lift the cup from the vegetable and to release the cup from the cutting means.

10. The apparatus as claimed in claim 9 including means to position the vegetable with respect to the cutting means.

11. The apparatus as claimed in claim 9 or 10, in which the cutting means comprises a pair of concentric cutting tubes having an annular space therebetween, the annular cutting edge of the outer tube extending beyond the annular cutting edge of the inner tube.

12. The apparatus as claimed in any one of claims 9-11, in which the plug severing means comprises a spur carried by the cutting means and actuable to move across the base of the plug.

13. The apparatus as claimed in any one of claims 9-12 including means fixed to the cutting means to trim the vegetable adjacent the rim of the cup.

14. The apparatus as claimed in any one of claims 9-13, including means fixed to the cutting means to trim the rim of the cup.

15. The apparatus as claimed in any one of claims 9-14, in which the cutting means comprises a pair of concentric cutting tubes, having an annular space therebetween, the annular cutting end of the inner tube terminating within the annular cutting end of the outer tube, the drive means including a drive shaft having a cruciform brace fixed radially thereon and carrying the cutting tubes concentrically on the drive shaft, that portion of the brace lying within the inner tube terminating at said cutting end thereof, that portion of the brace lying between the inner tube and the outer tube terminating between the two tubes.

16. The apparatus of claim 8, **characterized** by:
- a pair of plates converging to form a knife edge, the plates having opposed apertures,
- carrier means to hold the vegetable and to pass the vegetable over the knife edge whereby the vegetable is divided into two sections, one section being moved to a position covering each aperture.
- knife means rotatable to pass through the apertures whereby the vegetable sections are scooped out; and
- the carrier means being retractable whereby the scooped vegetable sections are releasable therefrom.

17. The apparatus as claimed in claim 16 including means to hold the sections against the apertures.

18. The apparatus as claimed in claim 16 or 17 in which the knife means comprises a shaft interposed between the plates and a knife assembly projecting radially from the shaft, the knife assembly being movable, on rotation of the shaft in a circular path intersecting the apertures.

19. The apparatus as claimed in claim 18, in which the knife assembly is detachable from the shaft.

20. The apparatus as claims in any one of claims 16-19, in which the carrier means comprises a shaft carrying a plurality of laterally flexible fingers extending fromn one end of the shaft, and an inner lining carried by the fingers forming a bifurcated shell.

21. The apparatus as claimed in claim 20, in which the shaft is split into a pair of longitudinal segments, and lateral fluid actuated means extending radially from the segments whereby the segments are laterally separable to open the cup.

22. The apparatus of claim 8, **characterized** by:
- support means for holding the vegetable;
- a boring tool comprising a rotatable shaft having a free end and at least one laterally flexible spring blade lying parallel to the shaft;
- means to advance the shaft longitudinally in the direction of the support means to penetrate a vegetable held therein; and
- means to flex the blades laterally to generate a cavity in the vegetable on rotation of the shaft.

23. The apparatus as claimed in claim 22 including means to eject the material from the cavity.

24. The apparatus as claimed in claim 22 or 23, in which the shaft is tubular with a plurality of lateral orifices and the ejection means comprises means for delivering fluid under pressure into the shaft.

25. The apparatus as claimed in any one of claims 22-24, in which the blades are each fixed at one end adjacent the free end of the shaft and at the other end to a collar movable coaxially along the shaft.

26. The apparatus as claimed in any one of claims 22-25, in which the blades are each fixed at said one end to a socket providing a pointed free end to the shaft.

27. An apparatus as claimed in any one of claims 22-26, in which the support means comprises a cup having a resilient inner lining.

28. The apparatus of claim 8, **characterized** by:
- a downwardly sloping pair of cutters each having an upwardly opening U-shaped channel member with the lower end thereof forming a cutting edge lying in a vertical plane;
- a pair of U-shaped knives pivotally mounted at each end thereof one within each of the cutters and lying in the contour of the channel;
- means to support a vegetable below the cutters to lie in a predetermined vertical plane; and
- means to move the cutters longitudinally, and to rotate the knives upwardly in a circular arc, to abut one another in said vertical plane.

29. The apparatus as claimed in claim 28, in which the support means comprises a cup having a resilient inner lining.

30. The apparatus as claimed in claim 28 or 29 which the means to rotate the knives upwardly comprises rack and pinion means mounted on the outer side of each of the cutters.
